# EUROPÄISCHE PATENTANMELDUNG

(11) **EP 3 135 637 A1**
(43) Veröffentlichungstag der Anmeldung: **01.03.2017**
(21) Anmeldenummer: 15183081.7
(22) Anmeldetag: 31.08.2015
(51) Int. Cl.: C02F 3/12

(54) **SBR-KLÄRANLAGE**

(71) Anmelder: KLARO GmbH, 95447 Bayreuth (DE)
(72) Erfinder: Graf, Otto P., 79331 Teningen (DE)
(74) Vertreter: Grünecker Patent- und Rechtsanwälte PartG mbB

(57) **Zusammenfassung**

In einer SBR-Kläranlage (K) mit einem Ablauf (6) und einer bedarfsabhängig aktivierbaren, zum Ablauf (6) führenden Klarwasser-Hebevorrichtung (3) sind unter einem Auslass (2) der Hebevorrichtung eine sich selbst in die SBR-Kläranlage (K) entleerende Abscheidekammer (4) und zwischen der Abscheidekammer (4) und dem Ablauf (6) ein über eine Überlaufschwelle (10) aus der Abscheidekammer (4) speisbarer Probenahmebehälter (5) vorgesehen, um einen anfänglichen verschmutzten Spülstoß bei einem Abzugszyklus vom Probenahmebehälter (5) fernzuhalten.

## Beschreibung

Die Erfindung betrifft eine SBR-Kläranlage gemäß Oberbegriff des Patentanspruchs 1 und ein Verfahren gemäß Oberbegriff des Patentanspruchs 12.

Bei SBR-Kläranlagen, insbesondere Kleinkläranlagen, sammelt sich z.B. in der Belüftungsphase im Ansaugbereich der Hebevorrichtung Belebtschlamm, der beim Aktivieren der Hebevorrichtung ausgetragen wird und mit dem ersten Spülstoß im Abzugszyklus das Klarwasser verschmutzt. Insbesondere bei Verwendung einer Druckluft-Hebevorrichtung (Mammut-Heber) sammelt sich im Ansaugbereich bzw. einem U-Rohrabschnitt des Hebers der Belebtschlamm, der dann den ersten Spülstoß verschmutzt. Aber auch bei einer Hebevorrichtung mit einer Pumpe lässt sich diese Anfangsverschmutzung beobachten.

Die Abkürzung SBR (sequencing batch reactor) bezieht sich auf Kläranlagen mit unkontrolliertem Abwasser-Zulauf und kontrollierten Klarwasser-Abzugszyklen aus dem Klärbecken.

Gängige Praxis zur Lösung des oben erwähnten Problems sind Rückspülvorrichtungen, die den Belebtschlamm vor einem Klarwasser-Abzugszyklus in die SBR-Kläranlage spülen. Diese Vorrichtungen sind jedoch technisch aufwändig und bei bestehenden Anlagen nur schwer nachrüstbar. Eine andere Lösung ist es, die hydraulische Verbindung zwischen dem Ansaugbereich der Hebevorrichtung und der SBR-Kläranlage während der Belüftungsphase, in der der meiste Belebtschlamm in den Ansaugbereich eindringt, durch eine Luftblase zu trennen. Die Luftblase kann Belebtschlamm nicht durchdringen bzw. kann sich dann nicht im Ansaugbereich der Hebevorrichtung ansammeln. Diese Lösung funktioniert jedoch nur bei SBR-Kläranlagen, bei denen zu Beginn eines Klärzyklus ein kontrollierter Abwasser-Zulauf stattfindet.

Der mit dem ersten Spülstoß aus der SBR-Kläranlage geförderte Belebtschlamm hat insbesondere negative Auswirkungen auf beispielsweise der SBR-Kläranlage nachgeschaltete Verrieselungs- und Versickerungsanlagen, sowie auf die durchschnittliche Reinigungsleistung der Anlage.

Die unvermeidbare Verschmutzung wird somit entweder in einem eigentlich pflichtgemäß vorgesehenen Probenahmebehälter gespeichert oder andernfalls gleich durch den Ablauf ausgetragen, was beides unerwünscht ist. Wenn der verschmutzte erste Spülstoß im Probenahmebehälter enthalten ist, wird das Ergebnis der Probenahme ungünstig und entspricht das Ergebnis der Probenahme hinsichtlich der Qualität des untersuchten Klarwassers nicht dem tatsächlichen Abscheideverhalten der SBR-Kläranlage.

Der Erfindung liegt die Aufgabe zugrunde, vorrichtungs- und verfahrenstechnisch eine baulich einfache, kostengünstige und auch zur Nachrüstung bestehender Anlagen geeignete Lösung dieses Problems zu schaffen, insbesondere für SBR-Kleinkläranlagen mit unkontrolliertem Zulauf.

Die gestellte Aufgabe wird mit den Merkmalen des Patentanspruchs 1 und verfahrensgemäß mit den Merkmalen des Patentanspruchs 12 gelöst.

Da der erste Spülstoß im Abzugszyklus mit der gegebenenfalls enthaltenen Verschmutzung nicht mehr direkt zum Ablauf oder zum Probenahmebehälter gelangt, sondern zunächst in die Abscheidekammer gebracht wird, und weiterhin gefördertes Klarwasser nur über die Überlaufschwelle abläuft oder in den Probenahmebehälter gelangt, wird mit baulich einfachen und kostengünstigen Mitteln der Nachteil des verschmutzten ersten Spülstoßes zumindest weitestgehend kompensiert, da die verschmutzende Befrachtung zunächst in der Abscheidekammer bleibt, und anschließend nur sauberes Klarwasser in den Ablauf bzw. den Probenahmebehälter gelangt. Sofern aus dem Probenahmebehälter dann eine Probenahme vorgenommen wird, entspricht diese Probenahme der tatsächlichen Leistungsfähigkeit der Kläranlage hinsichtlich der Qualität des Klarwassers.

Bei dem Verfahren wird Klarwasser aus der Hebevorrichtung zunächst in die Abscheidekammer eingebracht, und wird die Abscheidekammer zumindest bis mindestens mit dem verschmutzten Spülstoß gefüllt. Erst dann wird aus der Abscheidekammer bei weiterem Klarwasser-Zulauf vorwiegend oberflächiges Klarwasser über die Überlaufschwelle in den an den Ablauf angeschlossenen Probenahmebehälter überführt, so dass eine verschmutzende Befrachtung beim ersten Spülstoß in der Abscheidekammer verbleibt. Bei weiterem Zulauf wird nach Erreichen der Höhe des Ablaufs erst Klarwasser aus dem Probenahmebehälter abgelassen, wobei darin bis zum Erreichen der Höhe des Ablaufs zunächst Klarwasser gespeichert bleibt. Aus diesem gespeicherten Klarwasser kann eine Probenahme entnommen werden, die ein zur Reinigungsleistung der SBR-Kläranlage aussagefähiges Resultat liefert.

Bei einer zweckmäßigen Ausführungsform der SBR-Kläranlage weist die sich in die Kläranlage entleerende Abscheidekammer wenigstens eine bodenseitige Öffnung auf, so dass von dem ersten Spülschwall beim weiteren Klarwasserabzug zumindest ein Großteil zusammen mit dem Belebtschlamm gleich wieder in die SBR-Kläranlage zurückfließt. Der Querschnitt dieser Öffnung ist wesentlich kleiner als der Querschnitt des Auslasses der Hebevorrichtung, und wird beispielsweise nach der Förderkapazität der Hebevorrichtung so bemessen, dass in üblichen Abzugspausen die Abscheidekammer wieder geleert wird und auch ein Verstopfen der Öffnung ausgeschlossen werden kann. Flankierend kann die Abscheidekammer eine mechanische Rückhaltebaugruppe aufweisen, die ein Vermischen der verschmutzten Charge in der Abscheidekammer mit weiterhin zulaufendem Klarwasser zumindest minimiert, so dass aus der Abscheidekammer nur oberflächiges und sauberes Klarwasser in den Probenahmebehälter übertritt, und Verschmutzungen in der Abscheidekammer zurückgehalten und wieder in die SBR-Kläranlage verbracht werden.

Für die Hebevorrichtung bieten sich beispielsweise zwei Lösungen an. So kann die Hebevorrichtung eine an eine Steigleitung zum Auslass angeschlossene Pumpe aufweisen. Der Vorzug wird jedoch einem Druckluftheber gegeben, der z.B. einen unteren U-Rohrabschnitt und einen oberen, den Auslass oberhalb der Abscheidekammer platzierenden U-Rohrabschnitt aufweist. Im unteren U-Rohrabschnitt pflegt sich in der Belüftungsphase Belebtschlamm zu sammeln. Der Druckluftheber wird dadurch aktiviert, dass in die im Druckluftheber stehende Wassersäule von unten Druckluft eingeblasen wird, die durch sich verteilende Luftbläschen die Wassersäule nach oben durch den Auslass drückt.

In einer zweckmäßigen Ausführungsform bilden die Abscheidekammer und der Probenahmebehälter entweder einen gemeinsamen, eine die Überlaufschwelle bildende Trennwand aufweisenden Behälter, oder zwei getrennte Behälter. Der Ablauf liegt unterhalb der Überlaufschwelle. Dies sind baulich montagetechnisch und hinsichtlich der Wartung einfache Lösungen. Im Übrigen können die Abscheidekammer und der Probenahmebehälter in Strömungsrichtung zum Ablauf hintereinander versetzt oder zum Einsparen von Bauraum nebeneinander angeordnet sein.

Das Fassungsvermögen der Abscheidekammer ist an die Förderkapazität der Hebevorrichtung angepasst, um den anfänglichen Spülstoß mit der Verschmutzung sicher aufzunehmen. Bei einem Klarwasser-Druckluftheber der Nennweite 50 mm reicht z.B. in der Regel ein Fassungsvermögen der Abscheidekammer von 5 Liter aus. Das Fassungsvermögen des Probenahmebehälters kann gleich bleiben und spielt für die Funktion der Verschmutzungsaussonderung keine Rolle.

Zur Anpassung an eine leistungsstärkere Hebevorrichtung kann ein kleinerer Grundtyp der Abscheidekammer durch wenigstens ein hinzugefügtes Zusatzvolumen vergrößert werden, z.B. durch ein optional angestecktes Rohrknie.

Zweckmäßig liegt der Boden der Abscheidekammer oberhalb des maximalen Füllniveaus der SBR-Kläranlage, damit sich die Abscheidekammer problemlos entleeren kann. Der Boden des Probenahmebehälters kann oberhalb oder unterhalb des maximalen Füllniveaus liegen. So wird das Abscheideverhalten möglichst wenig beeinträchtigt. Ferner ist somit sichergestellt, dass bei voller SBR-Kläranlage kein Abwasser in die Abscheidekammer und/oder den Probenahmebehälter gelangt, ausgenommen von der Hebevorrichtung bei einem Abzugszyklus gepumptes Klarwasser.

In einer zweckmäßigen Ausführungsform umfasst die, vorzugsweise heraushebbar in der Abscheidekammer platzierte, Rückhaltebaugruppe zwei schräge Prallplatten, vorzugsweise eine mit einem Durchlass, und eine obere, in Einbaulage in Abstand vor der Überlaufschwelle platzierte, in etwa vertikale Prallplatte. Mit dieser Rückhaltebaugruppe wird der anfängliche, verschmutzte Spülschwall so in die Abscheidekammer gebracht, dass die Befrachtung im Wesentlichen nicht mehr zur Überlaufschwelle kommen kann.

Bei einer weiteren modular gestalteten Ausführungsform ist der die, z.B. mit viereckigem Querschnitt, Abscheidekammer bildende Behälter über einen im Bereich der Überlaufschwelle angeformten Haken mit dem dem Probenahmebehälter mit beispielsweise rundem Querschnitt formschlüssig verbindbar. Der Haken ermöglicht mit einer runden Gestalt des Probenahmebehälters unterschiedliche Drehorientierungen des Probenahmebehälters und des Ablaufs in Bezug auf die Abscheidekammer, und sichert die funktionsgerechte Verbindung der beiden Behälter. Die Querschnitte der Abscheidekammer und der Probenahmebehälter sind im Übrigen z.B. im Hinblick auf Platzverhältnisse frei wählbar.

Bei einer zweckmäßigen Verfahrensvariante wird aus dem im Probenahmebehälter gespeicherten Klarwasser eine Probe genommen, wobei das bei der Probenahme entnommene Klarwasser hohe Qualität hat, da die verschmutzende Befrachtung des ersten Spülstoßes zunächst in der Abscheidekammer abgesondert wurde. Zumindest in Deutschland sind Probenahmen Pflicht.

Schließlich ist es verfahrensgemäß wichtig, dass beim Füllen der Abscheidekammer ein Vermischen von oberflächigen Klarwasser mit unten in der Abscheidekammer vorhandenem, verschmutztem Klarwasser durch eine mechanische Rückhaltebaugruppe in der Abscheidekammer zumindest minimiert, wenn nicht sogar ausgeschlossen, wird.

Ausführungsformen des Erfindungsgegenstandes werden anhand der Zeichnung erläutert. Es zeigen:
- Fig. 1: eine Schemadarstellung eines Teils einer SBR-Kläranlage in einer Pause nach einem Abzugszyklus,
- Fig. 2: den Beginn eines Klarwasser-Abzugszyklus,
- Fig. 3: den fortgesetzten Klarwasserabzugszyklus, und
- Fig. 4-6: eine weitere Ausführungsform in verschiedenen Ansichten.

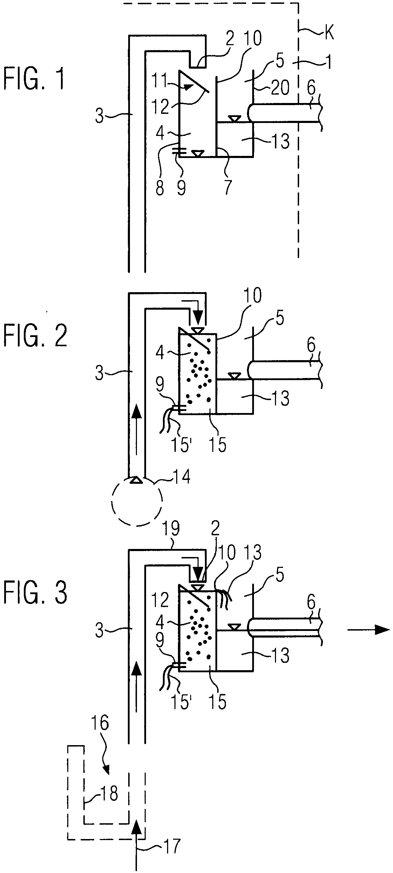

Fig. 1 zeigt gestrichelt einen Behälter 1 einer Kläranlage K, insbesondere einer SBR-Kleinkläranlage, aus der ein Ablauf 6 nach außen führt. In der SBR-Kläranlage K erstreckt sich eine Steigleitung 3 einer Hebevorrichtung nach oben, die zum bedarfsabhängigen Abziehen von Klarwasser aktiviert wird und einen Auslass 2 aufweist, der sich oberhalb einer hier in der SBR-Kläranlage K verbauten Abscheidekammer 4 befindet. Die Abscheidekammer 4 grenzt an einen Probenahmebehälter 5 an, aus dem unterhalb einer Überlaufschwelle 10 zum Probenahmebehälter der Ablauf 6 nach außen führt.

Die Abscheidekammer 4 und der Probenahmebehälter 5 sind als ein Behälter 8 durch eine Trennwand 7 getrennt, die oberseitig die unterhalb der oberen, gegebenenfalls offenen Öffnungen der Abscheidekammer 4 und des Probenahmebehälters 5 liegende Überlaufschwelle 10 bildet.

Die Überlaufschwelle 10 könnte alternativ auf andere Weise ausgebildet sein.

Zum Entleeren der Abscheidekammer 4 in die SBR-Kläranlage K weist die Abscheidekammer 4 bodenseitig wenigstens eine Öffnung 9 auf, z.B. eine oder mehrere Bohrungen. Der Bohrungsdurchmesser ist wesentlich kleiner als der Querschnitt des Auslasses 2 oder des Bereichs der Überlaufschwelle 10. In der Abscheidekammer 4 ist eine Rückhaltebaugruppe 11 (optional) installiert, beispielsweise in Fig. 1 eine von einer Wand der Abscheidekammer 4 schräg nach unten in Richtung zur gegenüberliegenden Wand und bis unter die Überlaufschwelle 10 verlaufende Prallplatte 12, die in knappem Abstand von der gegenüberliegenden Wand endet. Aufgabe der Rückhaltebaugruppe 11 ist es, Klarwasser zumindest mit der Strömungsrate aus dem Auslass 2 in die Abscheidekammer 4 einströmen zu lassen, aber ein Vermischen der unterhalb der Prallplatte 12 vorliegenden Charge mit oberflächigem Klarwasser weitestgehend zu minimieren oder vollständig zu verhindern. Beim ersten Spülstoß aus der Hebevorrichtung 3 wird nämlich häufig befrachtender Belebtschlamm mitgefördert, der in der Abscheidekammer 4 mit Klarwasser zunächst abgesondert wird, so dass bei weiterem Abzug nur oberflächiges und sauberes Klarwasser über die Überlaufschwelle 10 in den Probenahmebehälter 5 oder den Ablauf 6 eintritt.

Anstelle nur einer Prallplatte 12 können mehrere und/oder andere mechanische Rückhaltebaugruppen 11 in der Abscheidekammer 4 vorgesehen sein.

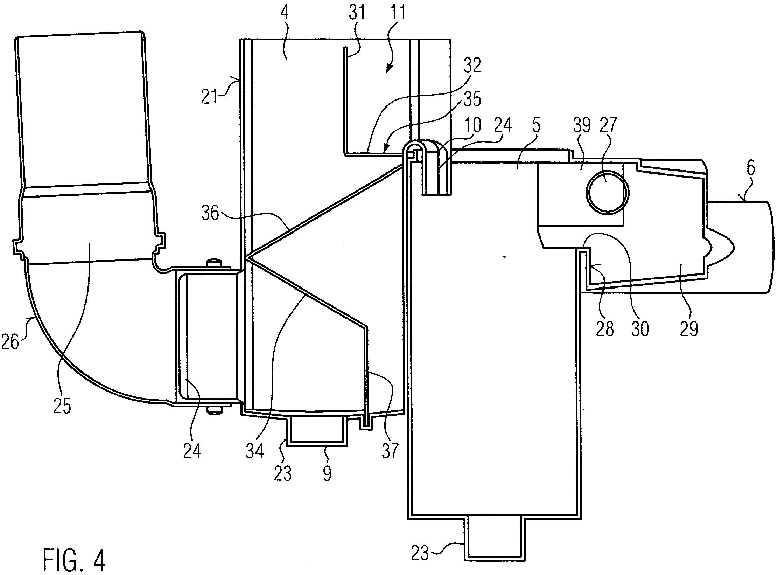

In Fig. 1 bilden die Abscheidekammer 4 und der Probenahmebehälter 5 z.B. einen gemeinsamen, durch die Trennwand 7 unterteilten Behälter 8 in der SBR-Kläranlage K. Die Abscheidekammer 4 und der Probenahmebehälter 5 könnten jedoch auch separate Behälter 21, 22 sein (siehe Fig. 4-6). Der Boden der Abscheidekammer 4 liegt oberhalb des in Fig. 1 strichpunktiert angedeuteten maximalen Füllniveaus der SBR-Kläranlage. Der Boden des Probenahmebehälters 5 kann hingegen in einem Bereich oberhalb bis unterhalb des maximalen Füllniveaus liegen. Das Fassungsvermögen der Abscheidekammer 4 ist an die Förderkapazität der Hebevorrichtung so angepasst, dass der erste Spülstoß mit der verschmutzenden Befrachtung zuverlässig abgesondert wird. Das Fassungsvermögen des Probenahmebehälters 5 ist für das Verfahren unerheblich. Bei einem Klarwasser-Druckluftheber der Nennweite 50 mm reicht z.B. in der Regel ein Fassungsvermögen der Abscheidekammer 4 von 5 Liter aus. Bei größeren Nenndurchmessern des Klarwasserhebers kann jedoch das Fassungsvermögen der Abscheidekammer 4 deutlich größer sein.

Fig. 1 verdeutlicht eine Pause nach einem Abzugszyklus, in der die Hebevorrichtung noch nicht aktiviert ist und im Probenahmebehälter 5 bis zur Höhe des Ablaufes 6 eine Charge reines Klarwasser 13 aus dem vorhergehenden Abzugszyklus gespeichert ist.

Fig. 2 verdeutlicht den Beginn eines Klarwasser-Abzugszyklus durch Aktivieren der Hebevorrichtung, wobei der erste Spülstoß mit der verschmutzenden Befrachtung schon in der Abscheidekammer 4 enthalten ist, die zunächst bis auf die Höhe der Überlaufschwelle 10 gefüllt wird. Mit 15' ist durch die Öffnung 9 bereits dann in die SBR-Kläranlage K ablaufendes, befrachtetes Klarwasser angedeutet, das die Verschmutzung mit entleert.

In der Ausführungsform in Fig. 2 weist die Hebevorrichtung eine Pumpe 14 auf, die in die Steigleitung 3 zum Auslass 2 fördert. Ferner verdeutlicht Fig. 2, dass am Beginn des Klarwasser-Abzugszyklus zunächst noch kein Klarwasser in den Probenahmebehälter 5 übertritt, sondern darin noch die Charge 13 an reinem Klarwasser aus dem vorhergehenden Abzugszyklus gespeichert ist, und zwar bis auf die Höhe des Ablaufes 6.

Fig. 3 zeigt die Fortsetzung des Klarwasser-Abzugszyklus, wobei oberflächiges Klarwasser, aus dem Auslass 2 kommend, über die Überlaufschwelle 10 in den Probenahmebehälter 5 einströmt und durch den Ablauf 6 abströmt. Gleichzeitig strömt befrachtetes Klarwasser 15' aus der Abscheidekammer 4 durch die Öffnung 9 zurück in die SBR-Kläranlage K. Die Prallplatte 12 verhindert eine Vermischung zwischen dem sauberen oberflächigen und dem befrachteten Klarwasser in der Abscheidekammer 4.

Nach der in Fig. 3 gezeigten Phase wird die Hebevorrichtung wieder deaktiviert. Das befrachtete Klarwasser 15' läuft aus der Öffnung 9 vollständig in die SBR-Kläranlage K zurück, sodass sich die Abscheidekammer 4 selbsttätig entleert, während gem. Fig. 1 im Probenahmebehälter 5 sauberes Klarwasser als Charge 13 gespeichert bleibt.

Fig. 3 verdeutlicht ferner als Hebevorrichtung einen sogenannten Druckluftheber, der das Steigrohr 3 zum Auslass 2 und unterseitig einen U-Rohrabschnitt 18 (dessen Mündung oberhalb eines maximalen Schlammsammelniveaus liegt) sowie oberseitig einen zum Auslass 2 führenden U-Rohrabschnitt 19 aufweist, und, wie bei 17 angedeutet, mit Druckluft gespeist wird. Dieser Druckluftheber 16 zeichnet sich durch starke Unempfindlichkeit gegen das Abscheidegut, die Vermeidung von Mechanik und Elektrik im Abwasser, und geringen Energieverbrauch aus.

Im Kern besteht die Erfindung darin, in der SBR-Kläranlage K mit baulich einfachen Installationen dafür zu sorgen, dass die verschmutzende Befrachtung des ersten Spülstoßes am Beginn eines Klarwasser-Abzugszyklus nicht in den Probenahmebehälter 5 oder den Ablauf 6 gelangt, sondern in der Abscheidekammer 4 zurückgehalten und nachfolgend wieder in die SBR-Kläranlage K entleert wird, so dass nur sauberes oberflächiges Klarwasser aus der Abscheidekammer 4 in den Probenahmebehälter 5 übertritt.

Die Fig. 4-6 verdeutlichen in einer Schnittansicht, einer perspektivischen Draufsicht und einer Draufsicht eine weitere Ausführungsform, die funktionell den Ausführungsformen der Fig. 1-3 entspricht.

In Fig. 4, 5 und 6 ist die Abscheidekammer ein Behälter 21 mit beispielsweise viereckigem oder sogar quadratischem Außenumriss, der über einen angeformten, die Überlaufschwelle 10, z.B. mit bogenförmigem Verlauf, bildenden Haken 24 mit dem oberen Öffnungsrand des hier als beispielsweise runder Behälter 22 ausgebildeten Probenahmebehälters 5 verbunden ist. Diese Komponenten sind zweckmäßig Kunststoff-Formteile.

Als optionale Ausstattung ist in den Figuren 4-6 ein zusätzliches Volumen 25 gezeigt, mit welchem das Fassungsvermögen der Abscheidekammer 4 im Falle einer leistungsstärkeren Hebevorrichtung modular vergrößerbar ist, um den ersten, befrachteten Spülschwall zuverlässig aufnehmen zu können. Hierzu ist, optional, an einer Wand des Behälters 21 ein Rohrstutzen 24 angeformt, auf den ein das Zusatzvolumen 25 bildendes Rohrknie 26 aufgesteckt wird.

Der Rohrstutzen 24 ist normalerweise verschlossen, und wird nur freigelegt, wenn das Zusatzvolumen 25 angebracht wird.

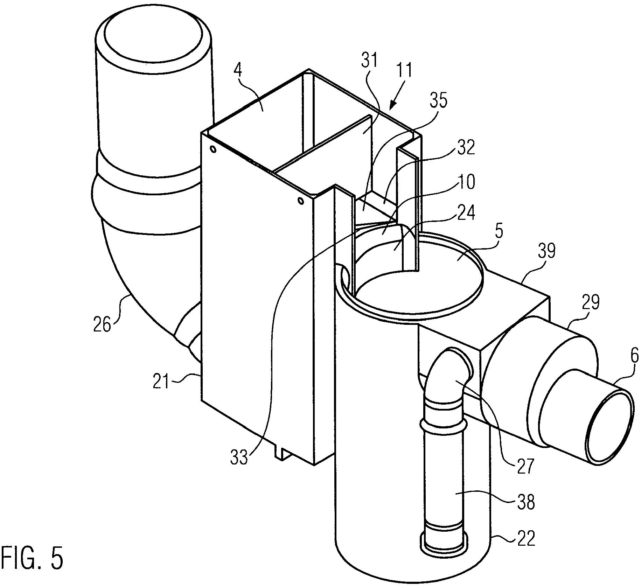

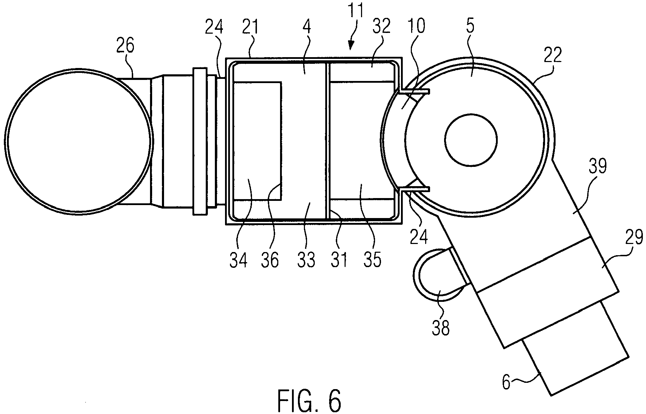

Weiterhin ist in Fig. 4 ein Einlass 27 eines in den Fig. 5 und 6 gezeigten, außen am Probenahmebehälter 5 angebrachten Rohrs 38 zu sehen. Das Rohr 38 bildet einen Notüberlauf der SBR-Kläranlage, über den bei Überfüllung durch das Rohr 38 direkt in den Ablauf 6 abgelassen wird, ohne den Probenahmebehälter 5 zu beaufschlagen oder zu verschmutzen. Dazu ist der Anschluss 27 beispielsweise jenseits einer Stufe 28 eines am Behälter 22 angeformten Blocks 39 platziert, wobei zwischen dem Block 39 und dem eigentlichen Ablauf 6 eine rohrförmige Kammer 29 vorgesehen ist. Die Stufe 28 definiert eine Art Überlaufschwelle 30 zwischen dem Probenahmebehälter 5 und der Kammer 29.

An beiden Behältern 21, 22 können bodenseitig Vorsprünge 23 angeformt sein, die zum Aufstecken auf Stützrohre (nicht gezeigt) nutzbar sind. Ferner ist in Fig. 4 die bodenseitige Öffnung 9 (z.B. eine Bohrung) der Abscheidekammer 4 gezeigt, über welche sich die Abscheidekammer 4 mit dem befrachteten Abwasser in die Kläranlage entleert.

Die Rückhaltestruktur 11 der Fig. 4-6 unterscheidet sich von der einfachen Rückhaltestruktur 11 der Ausführungsform der Fig. 1-3 dadurch, dass ein zweckmäßig einstückiges Blechformteil in die Abscheidekammer 4 eingesteckt und herausnehmbar positioniert wird. Diese Rückhaltestruktur weist oben eine in Betriebsposition im Abstand vor der Überlaufschwelle 10 über die ganze Breite der Abscheidekammer 4 in etwa vertikal hochstehende Prallplatte 31 auf, von der sich zwei seitliche Streben 32 zur Innenwand der Abscheidekammer 4 erstrecken, zwischen denen eine in den Fig. 5 und 6 besser ersichtliche Öffnung 35 freiliegt. Von den Streben 32 erstreckt sich eine schräge Prallplatte 33 nach unten zur gegenüberliegenden Innenwand der Abscheidekammer 4. Diese Prallplatte 33 enthält ebenfalls eine Öffnung 36. Schließlich erstreckt sich eine weitere schräge Prallplatte 34 bis nahe an die gegenüberliegende Innenwand der Abscheidekammer 4. Diese Prallplatte 34 stützt sich mit zwei seitlichen, in etwa vertikalen Stegen 37 in dafür vorgesehenen Fassungen im Boden der Abscheidekammer 4 ab.

Aufgrund der gerundeten Ausbildung des Hakens 24, der die Überlaufschwelle 10 bildet, und der hier kreisrunden Form des Behälters 22 als Probenahmebehälter 5, lässt sich der Probenahmebehälter 5 mit beliebiger Ausrichtung des Ablaufes 6 in unterschiedlichen Drehpositionen relativ zur Abscheidekammer 4 anbringen, wie dies in einer abknickenden Konfiguration in Fig. 6 gezeigt ist.

Der Boden des Probenahmebehälters 5 hat in den Ausführungsformen der Fig. 4-6 eine tiefere Lage als der Boden der Abscheidekammer 4. Das Rohrknie 26 als Zusatzvolumen 25 zur optionalen Verwendung kann als Zubehörteil dieser Ausstattung der Kläranlage mitgeliefert werden, oder ein handelsübliches Standardrohrknie sein. Statt eines Rohrknies 26 könnte wenigstens ein anderes, beliebig geformtes Zusatzvolumen 25 angebracht werden.

## Patentansprüche

1. SBR-Kläranlage (K), insbesondere SBR-Kleinkläranlage, mit wenigstens einer einen Ablauf (6) aufweisenden SBR-Kammer (1) und einer bedarfsabhängig aktivierbaren, zum Ablauf (6) führenden Hebevorrichtung (3, 14, 16), **dadurch gekennzeichnet, dass** unter einem Auslass (2) der Hebevorrichtung zum Klarwasserabzug eine sich selbst in die SBR-Kläranlage (K) entleerende Abscheidekammer (4) mit einer Überlaufschwelle (10) vorgesehen ist.

2. SBR-Kläranlage nach Anspruch 1, **dadurch gekennzeichnet, dass** die Überlaufschwelle (10) der Abscheidekammer (4) direkt an den Auslass der Kläranlage (6) oder an einen dem Ablauf (6) vorgesetzten Probenahmebehälter (5) angeschlossen werden kann.

3. SBR-Kläranlage nach Anspruch 1, **dadurch gekennzeichnet, dass** die Abscheidekammer (4) wenigstens eine mechanische Rückhaltebaugruppe (11) aufweist, über wenigstens eine bodenseitige Öffnung (9) mit der SBR-Kläranlage (K) entleerbar ist, und dass der Querschnitt der Öffnung (9) deutlich kleiner ist als der Auslassquerschnitt des Auslasses (2) der Hebevorrichtung ist.

4. SBR-Kläranlage nach wenigstens einem der vorhergehenden Ansprüche, **dadurch gekennzeichnet, dass** die Hebevorrichtung eine an eine Steigleitung (3) zum Auslass (2) angeschlossene Pumpe (14) oder ein Druckluftheber (16), vorzugsweise mit einem unteren U-Rohrabschnitt (18), einer Steigleitung (3), und einem oberen, den Auslass (2) oberhalb der Abscheidekammer (4) bildenden U-Rohrabschnitt (19) ist.

5. SBR-Kläranlage nach wenigstens einem der vorhergehenden Ansprüche, **dadurch gekennzeichnet, dass** die Abscheidekammer (4) und der Probenahmebehälter (5) entweder einen gemeinsamen, eine Trennwand (7) mit der Überlaufschwelle (10) aufweisenden Behälter (8) oder zwei getrennte Behälter bilden, vorzugsweise aus Kunststoff, und dass der Ablauf (6) unterhalb der Überlaufschwelle (10) liegt.

6. SBR-Kläranlage nach Anspruch 1, **dadurch gekennzeichnet, dass** die Abscheidekammer (4) ein, vorzugsweise dem Querschnitt der Hebevorrichtung angepasstes Fassungsvermögen aufweist.

7. SBR-Kläranlage nach Anspruch 1, **dadurch gekennzeichnet, dass** das Fassungsvermögen der Abscheidekammer (4) durch Anbringen wenigstens eines Zusatzvolumens (25) wahlweise vergrößerbar ist, vorzugsweise durch Anbringen eines Rohrknies (26).

8. SBR-Kläranlage nach Anspruch 1, **dadurch gekennzeichnet, dass** der Boden der Abscheidekammer (4) oberhalb des maximalen Füllniveaus der SBR-Kammer (1) liegt und dass der Boden des Probenahmebehälters (5) im Abstand oberhalb des Kläranlagen-Bodens zwischen oberhalb und unterhalb des maximalen Füllniveaus liegt.

9. SBR-Kläranlage nach Anspruch 2, **dadurch gekennzeichnet, dass** die Rückhaltebaugruppe (11) wenigstens eine zumindest schräg von einer Wand der Abscheidekammer (4) in Richtung zur gegenüberliegende Wand ragende Prallplatte (12) umfasst, vorzugsweise aus Metall.

10. SBR-Kläranlage nach Anspruch 8, **dadurch gekennzeichnet, dass** die, vorzugsweise heraushebbar in der Abscheidekammer platzierte, Rückhaltebaugruppe (11) zwei schräge Prallplatten (33, 34), vorzugsweise eine mit einem Durchlass (36), und eine obere, in Einbaulage im Abstand vor der Überlaufschwelle (10) platzierte, in etwa vertikale Prallplatte (31) umfasst.

11. SBR-Kläranlage nach Anspruch 2, **dadurch gekennzeichnet, dass** der die Abscheidekammer (4) bildende Behälter (21) über einen im Bereich der Überlaufschwelle (10) angeformten Haken (24) mit dem Probenahmebehälter (5) mit beispielsweise rundem Außenquerschnitt und angeformtem Ablauf (6) bildenden Behälter (22) formschlüssig verbindbar ist.

12. SBR-Kläranlage nach Anspruch 10, **dadurch gekennzeichnet, dass** der den Probenahmebehälter (5) bildende Behälter (22) mit dem Ablauf (6) über den Haken (24) in wählbaren, relativen Drehpositionen gegenüber dem die Abscheidekammer (4) bildenden Behälter (21) mit dem die Abscheidekammer (4) bildenden Behälter (21) verbindbar ist.

13. Verfahren zum zyklischen Abziehen von durch eine Hebevorrichtung (3, 14, 16) gefördertem Klarwasser über einen Ablauf (6) aus einer SBR-Kläranlage (K), **gekennzeichnet durch** folgende Schritte:
a) Klarwasser wird aus der Hebevorrichtung zunächst in eine in die SBR-Kläranlage (K) entleerbare Abscheidekammer (4) eingebracht und die Abscheidekammer (4) wird im Wesentlichen bis zu einer oben liegenden Überlaufschwelle (10) gefüllt,
b) aus der Abscheidekammer (4) wird nur oberflächiges Klarwasser in einen an den Ablauf (6) angeschlossenen Probenahmebehälter (5) überführt,
c) bis zum Erreichen der Höhe des Ablaufes (6) wird im Probenahmebehälter (5) zunächst Klarwasser (13) gespeichert, und
d) bei weiterem Zulauf von Klarwasser aus der Abscheidekammer wird nach Erreichen der Höhe des Ablaufes (6) weiterhin zulaufendes Klarwasser aus dem Probenahmebehälter (5) abgelassen.

14. Verfahren nach Anspruch 12, **dadurch gekennzeichnet, dass** aus dem im Probenahmebehälter (5) gespeicherten Klarwasser (13) eine Probenahme entnommen wird.

15. Verfahren nach Anspruch 12, **dadurch gekennzeichnet, dass** beim Füllen der Abscheidekammer (4), insbesondere verschmutztes, Klarwasser über eine bodenseitige Öffnung (9) mit einer geringeren Strömungsrate aus der Abscheidekammer (4) in die SBR-Kläranlage (K) abgelassen wird als die Strömungsrate des Klarwassers aus der Hebevorrichtung.

16. Verfahren nach Anspruch 12, **dadurch gekennzeichnet, dass** beim Füllen der Abscheidekammer (4) ein Vermischen von oberflächigem Klarwasser mit unten in der Abscheidekammer (4) vorliegendem und verschmutztem Klarwasser durch eine mechanische Rückhaltebaugruppe (11) in der Abscheidekammer (4) zumindest minimiert wird.
